# EUROPÄISCHE PATENTANMELDUNG

(11) **EP 3 213 961 A1**
(43) Veröffentlichungstag der Anmeldung: **06.09.2017**
(21) Anmeldenummer: 17158077.2
(22) Anmeldetag: 27.02.2017
(51) Int. Cl.: B60Q 1/04, F21S 8/10

(54) **SCHEINWERFER FÜR EIN KRAFTFAHRZEUG**

(30) Priorität: 03.03.2016 DE 202016101155 U
(71) Anmelder: Automotive Lighting Reutlingen GmbH, 72762 Reutlingen (DE)
(72) Erfinder: Hlawon, Herbert, 72800 Eningen (DE); Müller, Alexander, 72764 Reutlingen (DE); Stopper, Ralf, 72127 Kusterdingen (DE); Manz, Raphael, 73760 Ostfildern (DE); Kümmerle, Kurt, 72119 Ammerbuch (DE); Neubauer, Ulrich, 73235 Weilheim (DE)
(74) Vertreter: DREISS Patentanwälte PartG mbB

(57) **Zusammenfassung**

Die Erfindung betrifft einen Scheinwerfer (2) für ein Kraftfahrzeug mit einem Kunststoffgehäuse (4) und einem innerhalb des Kunststoffgehäuses (4) angeordneten Lichtmodul (10) zur Erzeugung einer Abblendlichtverteilung vor dem Kraftfahrzeug. Der Scheinwerfer zeichnet sich dadruch aus, dass eine im Wesentlichen starre Haltevorrichtung (16) eine Anzahl von äußeren, voneinander beabstandeten Befestigungsabschnitten (20-24) zur Anordnung des Scheinwerfers (2) am Kraftfahrzeug umfasst, dass die äußeren Befestigungsabschnitte (20-24) außerhalb des Kunststoffgehäuses (4) angeordnet sind, dass die Haltevorrichtung (16) zumindest einen inneren Befestigungsabschnitt (18) umfasst, und dass das Lichtmodul (10) innerhalb des Kunststoffgehäuses (4) mittels des zumindest einen inneren Befestigungsabschnitts (18) mit der Haltevorrichtung (16) verbunden ist.

## Beschreibung

Die Erfindung betrifft einen Scheinwerfer für ein Kraftfahrzeug nach dem Oberbegriff des Anspruchs 1.

Scheinwerfer, die ein Kunststoffgehäuse aufweisen, sind allgemein bekannt. Innerhalb des Kunststoffgehäuses ist zumindest ein Lichtmodul zur Erzeugung einer Abstrahllichtverteilung vor dem Kraftfahrzeug angeordnet.

Aufgrund der Wärmeentwicklung im Scheinwerfer selbst als auch um den Scheinwerfer herum kann es zu Lageveränderungen der vom Scheinwerfer abgestrahlten Lichtverteilung kommen. Beispielsweise ist die Hell-Dunkel-Grenze betroffen, was zu einer ungewollten Blendung des Gegenverkehrs oder zu einer unzureichenden Ausleuchtung der Fahrbahn vor dem Kraftfahrzeug führen kann.

Als Ursache hierfür ist bekannt, dass sich die im Kraftfahrzeugscheinwerfer verwendeten Kunststoffe aufgrund ihrer Zusammensetzung und aufgrund der Geometrie des Bauteils temperaturabhängig verformen. Des Weiteren sind die unterschiedlichen Wärmeausdehnungskoeffizienten der verwendeten, unterschiedlichen Materialien hierbei zu berücksichtigen. Insbesondere eine Spritzrichtung und ein Anteil von Glasfasern sind als Einflussgröße auf die temperaturabhängige Verformung bekannt. Auch die hierfür maßgebliche Temperatur ist nicht ohne weiteres vorherbestimmbar und von im Bereich des Kraftfahrzeugscheinwerfers verbauten temperaturbeeinflussenden Komponenten abhängig. Auch ist das Temperaturverhalten durch eine Simulation nicht gänzlich vorhersehbar. Insbesondere durch eine Alterung des Kunststoffgehäuses können problematische Verformungen und damit ungewollte Verschiebungen der Hell-Dunkel-Grenze der abgestrahlten Lichtverteilung einhergehen.

Aus der DE 10 2008 003 706 A1 ist beispielsweise eine Scheinwerferanordnung bekannt, bei der ein Temperatursensor zur Messung der Temperatur im Scheinwerfergehäuse vorgesehen ist, um eine temperaturbedingte Verlagerung des Abblendlichtes zu bestimmen und durch eine Leuchtweitenstelleinrichtung zu kompensieren.

Aufgabe der Erfindung ist es somit, einen verbesserten Scheinwerfer für ein Kraftfahrzeug bereitzustellen, bei dem eine gewünschte Position einer Lichtverteilung vor dem Kraftfahrzeug unabhängig von der Temperatur in oder um dem Scheinwerfer konstant gehalten werden kann.

Die der Erfindung zugrunde liegende Aufgabe wird durch einen Scheinwerfer nach dem Anspruch 1 gelöst. Vorteilhafte Weiterbildungen sind in den Unteransprüchen angegeben. Für die Erfindung wichtige Merkmale finden sich ferner in der nachfolgenden Beschreibung und in der Zeichnung, wobei die Merkmale sowohl in Alleinstellung als auch in unterschiedlichen Kombinationen für die Erfindung wichtig sein können, ohne dass hierauf nochmals explizit hingewiesen wird.

Es wird ein Scheinwerfer für ein Kraftfahrzeug vorgeschlagen, welcher ein Kunststoffgehäuse und ein innerhalb des Kunststoffgehäuses angeordnetes Lichtmodul zur Erzeugung einer Abblendlichtverteilung vor dem Kraftfahrzeug umfasst. Eine im Wesentlichen starre Haltevorrichtung umfasst eine Anzahl von äußeren, voneinander beabstandeten Befestigungsabschnitten zur Anordnung des Scheinwerfers am Kraftfahrzeug. Die äußeren Befestigungsabschnitte sind außerhalb des Kunststoffgehäuses angeordnet. Die Haltevorrichtung umfasst zumindest einen inneren Befestigungsabschnitt. Das Lichtmodul ist innerhalb des Kunststoffgehäuses mittels des zumindest einen inneren Befestigungsabschnitts mit der Haltevorrichtung verbunden. Die starre Haltevorrichtung sorgt vorteilhaft dafür, dass selbst bei einer temperaturbedingten Verformung des Kunststoffgehäuses sich im Wesentlichen keine Lageveränderungen der abgestrahlten Abblendlichtverteilung ergeben. Darüber hinaus sinken die Anforderungen hinsichtlich der temperaturbedingten Verformung des Kunststoffgehäuses.

In einer vorteilhaften Ausführungsform weist das Kunststoffgehäuse zumindest eine Durchgangsöffnung auf, durch welche die Haltevorrichtung geführt ist. Damit verbindet die Haltevorrichtung einen Innenraum und einen Außenraum des Kunststoffgehäuses und das Kunststoffgehäuse umschließt das die Abblendlichtverteilung erzeugende Lichtmodul. So sorgt das Kunststoffgehäuse für einen Schutz der in dem Kunststoffgehäuse angeordneten Komponenten. Gleichzeitig wird eine im Wesentlichen temperaturunabhängige Befestigung des Lichtmoduls mittels der äußeren Befestigungsabschnitte gewährleistet.

In einer vorteilhaften Ausführungsform ist die Haltevorrichtung abschnittsweise im Wesentlichen dem Wandverlauf des Kunststoffgehäuses folgend durch das Kunststoffgehäuse geführt. Damit kann vorteilhaft eine Stabilisierung des Kunststoffgehäuses erfolgen. Darüber hinaus kann die Haltevorrichtung unsichtbar bzw. platzsparend in das Kunststoffgehäuse integriert werden.

In einer vorteilhaften Ausführungsform umfasst die Haltevorrichtung drei äußere Befestigungsabschnitte. Damit wird eine statisch sichere Anordnung an der Karosserie des Kraftfahrzeugs ermöglicht.

In einer vorteilhaften Ausführungsform umfasst die Haltevorrichtung einen vierten Befestigungsabschnitt. Der vierte Befestigungsabschnitt sorgt für zusätzliche statische Sicherheit.

In einer vorteilhaften Ausführungsform ist an das Kunststoffgehäuse ein weiterer Befestigungsabschnitt angeformt. Hierdurch wird ein weiterer Befestigungspunkt geschaffen, welcher für das Kunststoffgehäuse neben den Durchführungen, welche für das Kunststoffgehäuse als Befestigung dienen, eine zusätzliche Befestigungsmöglichkeit bietet. Je nach Ausführung kann durch den weiteren Befestigungsabschnitt an dem Kunststoffgehäuse die Verbindung zwischen dem Scheinwerfer und der Karosserie verbessert werden.

In einer vorteilhaften Ausführungsform ist die Haltevorrichtung aus Metall. Neben der stabilen Ausführung der Haltevorrichtung lässt sich hierdurch auch eine Wärmeableitung von dem Lichtmodul realisieren.

Ein Kraftfahrzeug umfasst den Scheinwerfer. In einer Ausführungsform ist vorgesehen, dass der Scheinwerfer mittels der äußeren Befestigungsabschnitte an einer Karosserie des Kraftfahrzeugs befestigt ist.

In einer Weiterbildung ist vorgesehen, dass das Kunststoffgehäuse mittels des an das Kunststoffgehäuse angeformten Befestigungsabschnitts an der Karosserie des Kraftfahrzeugs befestigt ist.

Weitere Merkmale und Vorteile der Erfindung ergeben sich aus der nachfolgenden Beschreibung von Ausführungsbeispielen. Für funktionsäquivalente Merkmale und Größen werden in allen Figuren die gleichen Bezugszeichen verwendet, ohne dass nochmals darauf hingewiesen wird.

In der Zeichnung zeigen:

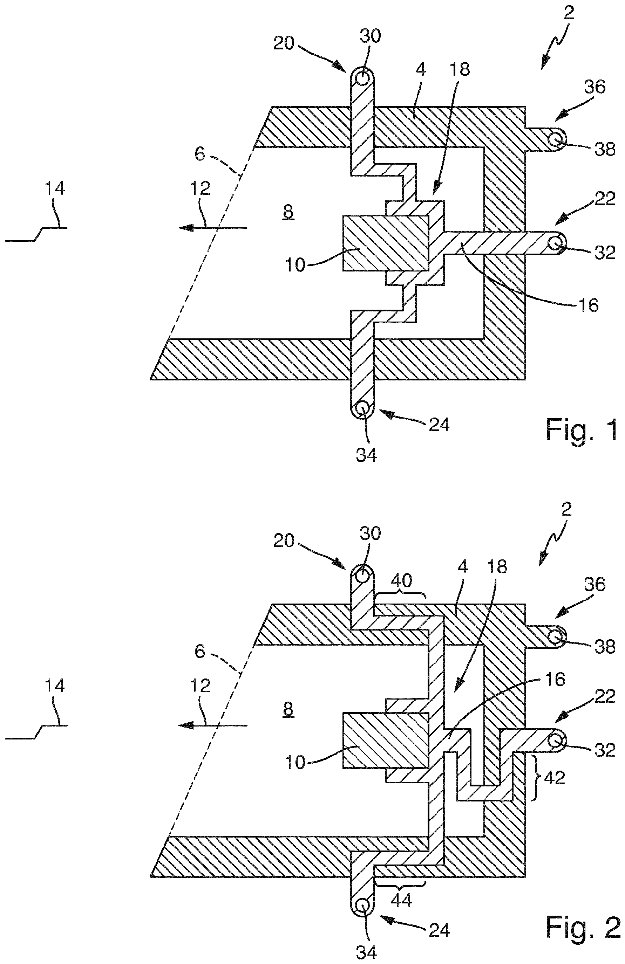

- Figuren 1 und 2: jeweils eine schematische Schnittansicht eines Scheinwerfers für ein Kraftfahrzeug.

Figur 1 zeigt eine schematische Schnittansicht eines Scheinwerfers 2 für ein Kraftfahrzeug. Der Scheinwerfer 2 umfasst ein Kunststoffgehäuse 4, dessen Öffnung mit einer transparenten Abdeckscheibe 6 verschlossen ist. In einem Innenraum 8 des Kunststoffgehäuses 4 ist ein Lichtmodul 10 angeordnet, welches zur Abstrahlung einer Abstrahllichtverteilung 12 auf eine Fahrbahn vor dem Kraftfahrzeug ausgebildet ist. Die Abstrahllichtverteilung 12 ist eine Abblendlichtverteilung mit einer Hell-Dunkel-Grenze 14.

Das Lichtmodul 10 ist mittels einer Haltevorrichtung 16 innerhalb des Kunststoffgehäuses 4 befestigt. Hierzu umfasst die Haltevorrichtung 16 zumindest einen inneren Befestigungsabschnitt 18, der vorliegend beispielhaft das Lichtmodul 10 abschnittsweise umgreift. Selbstverständlich können auch mehrere innere und voneinander beabstandete Befestigungsabschnitte vorgesehen sein, um das Lichtmodul 10 an seiner vorbestimmten Position zu halten.

Die Haltevorrichtung 16 weist eine Anzahl, bevorzugt drei außerhalb des Kunststoffgehäuses 4 angeordnete äußere Befestigungsabschnitte 20, 22 und 24 auf. Die Befestigungsabschnitte 20-24 sind an Arme der Haltevorrichtung 16 angeformt, wobei diese Arme durch jeweilige Durchgangsöffnungen des Kunststoffgehäuses 4 geführt sind.

Beispielsweise lassen sich entsprechende Arme der Haltevorrichtung 16 auch außerhalb des Kunststoffgehäuses 4 zusammenführen und durch eine gemeinsame Durchgangsöffnung wird die Verbindung mit dem zumindest einen inneren Befestigungsabschnitte 18 hergestellt. In dieser nicht gezeigten Ausführungsform kann somit eine einzige Durchgangsöffnung durch das Kunststoffgehäuse 4 ausreichen, um den zumindest einen inneren Befestigungsabschnitt 18 mit den äußeren Befestigungsabschnitten 20-24 zu verbinden.

Mithin sind unterschiedliche Ausführungsformen der Haltevorrichtung 16 denkbar, die sich beispielsweise in der Anzahl der Durchgangsöffnungen durch das Kunststoffgehäuse 4 voneinander unterscheiden. Auch kann die Haltevorrichtung 16 innerhalb oder außerhalb des Kunststoffgehäuses 4 stabilisierende Verstrebungen aufweisen.

Zwischen dem Kunststoffgehäuse 4 und der Haltevorrichtung 16 kann im Bereich der Durchgangsöffnungen durch das Kunststoffgehäuse 4 ein jeweiliger flexibler Einsatz vorhanden sein, der thermisch bedingte Bewegungen des Kunststoffgehäuses 4 aufnimmt und nicht unmittelbar an die Haltevorrichtung 16 weitergibt.

Auch kann die Haltevorrichtung 16 in nicht gezeigter Form einen vierten, äußeren Befestigungsabschnitt umfassen, um die Haltevorrichtung 16 mit der Karosserie des Kraftfahrzeugs zu verbinden.

Die äußeren Befestigungsabschnitte 20, 22 und 24 sind vorliegend mit jeweiligen Durchgangsöffnungen 30, 32 und 34 versehen, durch die beispielsweise ein Befestigungsmittel wie eine Schraube oder Niete führbar ist und die Haltevorrichtung 16 damit unmittelbar oder mittelbar mit der Karosserie des Kraftfahrzeugs verbindet. Selbstverständlich sind auch andere Ausführungsformen der äußeren Befestigungsabschnitte 20-24 denkbar.

Des Weiteren ist ein äußerer Befestigungsabschnitt 36 mit einer Durchgangsöffnung 38 an das Kunststoffgehäuse 4 angeformt, um das Kunststoffgehäuse 4 selbst mit der Karosserie zu verbinden.

Die Haltevorrichtung 16 ist bevorzugt aus einem Material gefertigt, dass eine höhere Steifigkeit besitzt als das aus Kunststoff gefertigte Kunststoffgehäuse 4. Insbesondere ist die Haltevorrichtung 16 aus einem Metall.

Figur 2 zeigt eine schematische Schnittansicht einer Ausführungsform des Scheinwerfers 2 für ein Kraftfahrzeug. Im Unterschied zu Figur 1 ist die Haltevorrichtung 16 in jeweiligen Abschnitten 40, 42 und 44 derart durch das Kunststoffgehäuse 4 geführt, dass die Haltevorrichtung in den vorgenannten Abschnitten 40, 42 und 44 im Wesentlichen einem Wandverlauf des Kunststoffgehäuses 4 folgt.

## Patentansprüche

1. Ein Scheinwerfer (2) für ein Kraftfahrzeug mit einem Kunststoffgehäuse (4) und einem innerhalb des Kunststoffgehäuses (4) angeordneten Lichtmodul (10) zur Erzeugung einer Abblendlichtverteilung vor dem Kraftfahrzeug, **dadurch gekennzeichnet, dass** eine im Wesentlichen starre Haltevorrichtung (16) eine Anzahl von äußeren, voneinander beabstandeten Befestigungsabschnitten (20-24) zur Anordnung des Scheinwerfers (2) am Kraftfahrzeug umfasst, dass die äußeren Befestigungsabschnitte (20-24) außerhalb des Kunststoffgehäuses (4) angeordnet sind, dass die Haltevorrichtung (16) zumindest einen inneren Befestigungsabschnitt (18) umfasst, und dass das Lichtmodul (10) innerhalb des Kunststoffgehäuses (4) mittels des zumindest einen inneren Befestigungsabschnitts (18) mit der Haltevorrichtung (16) verbunden ist.

2. Der Schweinwerfer (2) nach dem Anspruch 1, wobei das Kunststoffgehäuse (4) zumindest eine Durchgangsöffnung aufweist, durch welche die Haltevorrichtung (16) geführt ist.

3. Der Scheinwerfer (2) nach dem Anspruch 1 oder 2, wobei die Haltevorrichtung (16) abschnittsweise im Wesentlichen dem Wandverlauf des Kunststoffgehäuses (4) folgend durch das Kunststoffgehäuse (4) geführt ist.

4. Der Scheinwerfer (2) nach einem der vorstehenden Ansprüche, wobei die Haltevorrichtung (16) drei äußere Befestigungsabschnitte (20-24) umfasst.

5. Der Scheinwerfer (2) nach dem vorstehenden Anspruch, wobei die Haltevorrichtung (16) einen vierten äußeren Befestigungsabschnitt umfasst.

6. Der Scheinwerfer (2) nach einem der vorstehenden Ansprüche, wobei an das Kunststoffgehäuse (4) ein weiterer Befestigungsabschnitt (36) angeformt ist.

7. Der Scheinwerfer (2) nach einem der vorstehenden Ansprüche, wobei die Haltevorrichtung (16) aus Metall ist.

8. Ein Kraftfahrzeug umfassend den Scheinwerfer (2) nach einem der vorstehenden Ansprüche.

9. Das Kraftfahrzeug nach dem vorstehenden Anspruch, wobei der Scheinwerfer (2) mittels der äußeren Befestigungsabschnitte (20-24) der Haltevorrichtung an einer Karosserie des Kraftfahrzeugs befestigt ist.

10. Das Kraftfahrzeug nach dem Anspruch 9, wobei das Kunststoffgehäuse (4) mittels des an das Kunststoffgehäuse (4) angeformten Befestigungsabschnitts (36) an der Karosserie des Kraftfahrzeugs befestigt ist.
